(19) Europäisches Patentamt / European Patent Office / Office européen des brevets

(11) **EP 3 556 447 A1**

(12) **EUROPÄISCHE PATENTANMELDUNG**

(43) Veröffentlichungstag:
23.10.2019   Patentblatt 2019/43

(51) Int Cl.:
**B01D 9/00** (2006.01)          **B01D 29/085** (2006.01)
**B01D 29/60** (2006.01)

(21) Anmeldenummer: **18167620.6**

(22) Anmeldetag: **16.04.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Bayer AG**
**51373 Leverkusen (DE)**

(72) Erfinder:
• **Engelhardt, Kathrin Annette**
**51375 Leverkusen (DE)**
• **Gross, Reinhard**
**51375 Leverkusen (DE)**

(74) Vertreter: **BIP Patents**
**c/o Bayer Intellectual Property GmbH**
**Alfred-Nobel-Straße 10**
**40789 Monheim am Rhein (DE)**

(54) **PROZESSMONITORING EINER FILTRATION DURCH FILTRATMESSUNGEN**

(57)   Die Anmeldung betrifft Lösungen für das Monitoring, die Prozesssteuerung und Überwachung einer Feststoff-Filtration, insbesondere des Waschvorgangs dieses Feststoffes in einer Filtrationsanlage, insbesondere ein Messverfahren zur Kontrolle eines Filtrations- und Waschvorgangs eines Feststoffs in einem Filterapparat zur Kuchenfiltration, wobei mindestens eine Messvorrichtung im oder am Filtratablauf des Filterapparats angebracht ist, die einen oder mehrere Parameterwerte eines Filtratstroms aus dem Filterapparat zur Kuchenfiltration mindestens während des Waschvorgangs misst.

EP 3 556 447 A1

**Beschreibung**

Die Anmeldung betrifft Lösungen für das Monitoring, die Prozesssteuerung und Überwachung einer Feststoff-Filtration, insbesondere des Waschvorgangs dieses Feststoffes in einer Filtrationsanlage.

Üblicher Produktionsprozess zur Herstellung von festen Wirkstoffen gliedert sich ab Kristallisation bzw. Präzipitation wie folgt:

1. Kristallisation/ Präzipitation, auch Feststoffbildung genannt: In diesem Schritt des Produktionsprozesses entsteht der Feststoff suspendiert in Mutterlauge,

2. Filtration: der Feststoff wird in einem Filterapparat für Druck-, Vakuum oder Zentrifugalfiltration (auch im Folgenden als Filterapparate zusammenfassend genannt) von der Mutterlauge abgetrennt.

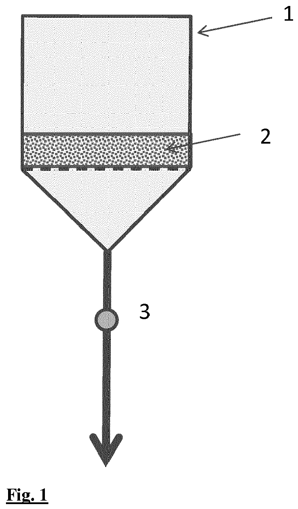

Übliche Filterapparate sind z. B. Nutschen, Zentrifugen, Trommel-oder Scheibenfilter etc., aber auch Porzellan-oder Glastrichter mit flachen Siebboden oder Fritte, oder ein sonstiges poröses Filterelement. Bei der Verwendung einer Nutsche wird z.B. die zu filtrierende Suspension auf den Apparat überführt, unter Druck oder Vakuum wird das Filtrat vom Feststoff getrennt, und abgeführt. Eine Nutsche ist exemplarisch in Fig. 1 schematisch dargestellt.

Üblicherweise schließen sich im Schritt 3 einer Feststofffiltration die Wäsche des Filterkuchens in einem Verdrängungs- und / oder Resuspendierungswaschvorgang an, um den Feststoff "sauber zu waschen" d.h. die geforderte Qualitätsmerkmale für den Feststoff zu erreichen. In diesem Schritt werden üblicherweise festgelegte Mengen Lösungsmittel (frisch oder recycelt) in einer festgelegten Anzahl von Waschschritten auf dem Filterkuchen gleichmäßig verteilt. Die Anzahl der Wäschen ist dabei abhängig von der geforderten Reinheit des Feststoffs. In der Regel wird der Filterapparat zwischen den Waschschritten nicht geöffnet, sodass aus diesem und anderen Gründen eine Beprobung des Filterkuchens nicht möglich ist.

Im Schritt 4 wird der Feststoff getrocknet. Dies geschieht üblicherweise entweder auch auf der Drucknutsche (Nutschtrockner) oder in einem separaten Trocknungsapparat.

Zwischen Schritt 3 und 4 können sich noch Schritte zur Formulierung z.B. Zugabe von Verflüssigern, Stabilisatoren etc. befinden.

Eine Qualitätskontrolle des Feststoffs während er noch im Filterapparat vorliegt (d .h. Punkt 2 bzw. 3) findet nach dem aktuellen Stand der Technik nicht statt. In der Regel wird die Analytik lediglich nach Abschluss von Schritt 4 durchgeführt. Typischerweise werden vom getrockneten Filterkuchen Feststoffproben gezogen und im Labor meist mittels Chromatographie analysiert. Allgemein wird in der Fachwelt davon ausgegangen, dass die Qualität des Filterkuchens nur durch direkte Analyse ermittelt werden kann. Die Überwachung der Qualität von Filterkuchen im Filtrationsprozess wurde infolgedessen bisher von den Fortschritten der Online Messtechnik nicht betroffen. Erfüllt der überprüfte Filterkuchen nicht die Spezifikation, muss daher das getrocknete Produkt erneut prozessiert, verworfen oder verschnitten werden. Die Menge an Waschmedium und die Waschstrategie (Verdrängungs-, Gegenstrom- bzw. Anmaischwäsche) wird typischerweise einmalig experimentell ermittelt und durch Analyse des Filterkuchens validiert.

Wäre eine frühe Qualitätskontrolle des Feststoffs möglich, könnte bei einer schlechten Qualität sofort reagiert werden und z. B. eine zusätzliche Wäsche durchgeführt werden (vorausgesetzt die Verunreinigungen sind auswaschbar und nicht im Kristall eingeschlossen). Bei einer sehr guten Qualität könnte ggf. auf Wäschen bzw. Waschmedium und damit Lösungsmittel oder auch Wasser verzichtet werden. Beide Varianten würden direkt massive Zeit- und Kostenersparnis ermöglichen.

Es bestand daher die Aufgabe eine Lösung für die Überwachung von Filtrations- und Waschprozessen bereitzustellen, die für eine Online-Überwachung verwendbar ist und keine Unterbrechung des Waschprozesses für die Qualitätskontrolle eines Filterkuchens erfordert.

Die Aufgabe wurde durch den Einsatz von Messtechnik zur Messung im Filtratstrom aus einem Filterapparat, gelöst, die während der Filtration Rückschlüsse über den Fortschritt und Qualität des Filtrations-, und Waschprozesses ermöglicht.

Erster Gegenstand der Anmeldung ist ein Messverfahren zur Kontrolle eines Filtration- und Waschvorgangs eines Feststoffs in einem Filterapparat zur Kuchenfiltration - insbesondere Qualitätskontrolle des Filterkuchens -, wobei mindestens eine Messvorrichtung im oder am Filtratablauf des Filterapparats angebracht ist, die eine oder mehrere Parameter eines Filtratstroms aus dem Filterapparat zur Kuchenfiltration während des Waschvorgangs misst.

Als geeignete messbare Parameter des Filtratstroms im Sinne der Anmeldung sind insbesondere Brechungsindex, Dichte, Ultraschalllaufzeit, Redoxpotential sowie spektroskopische Summen- und/oder stoffspezifische Eigenschaften mindestens eines repräsentativen Bestandteils im Filtratstrom (Haupt- und/oder Nebenkomponente), wie etwa Absorption, Impedanz, Farbe oder das Fluoreszenzsignal des Filtrates. Für wässrige Medien können auch pH-Wert und/oder Leitfähigkeit verwendet werden.

Die Auswahl der Messmethode hängt aber von den im Prozess verwendeten Substanzen (insb. Produkt(e) und / oder Nebenprodukt(e)) ab. Besonders bevorzugt wird die Messung des Brechungsindexes und / oder der Dichte des Filtrats im Verlauf der Filtration und Wäsche verwendet. Auch können eine oder mehrere der oben genannten Methoden kombiniert werden. Ebenso können für die Qualitätskontrolle neben den reinen Messwerten (Rohdaten) auch Konzentrationen der (Neben)komponenten unter Verwendung zuvor ermittelter Kalibrierfunktionen ermittelt werden.

In einer bevorzugten Ausführungsform des Verfahrens wird eine parallele Aufnahme von Brechungsindex und die im Stand der Technik (gemäß VDI Richtlinie 2762) übliche Messung der Filtratmasse durchgeführt.

Das Verfahren eignet sich sowohl für die Überwachung eines kontinuierlichen als für die Überwachung eines Batch-Prozesses. Bei einem kontinuierlichen Wäscheprozess im Sinne der Anmeldung wird das Waschmedium kontinuierlich auf dem Filterkuchen dosiert, so dass der Filterkuchen gleichmäßig über seine komplette Fläche bedeckt ist. Bei einem Batch-Prozess wird für die Wäsche eine vordefinierte Menge Waschmedium auf dem Filterkuchen aufgegeben.

Bevorzugt umfasst das Verfahren Computer-implementierte Schritte zur Analyse der Messdaten. Üblicherweise werden diese Schritte durch ein entsprechend konfiguriertes Computer-System durchgeführt.

Für die Analyse der Messdaten werden diese von der bzw. den Messvorrichtungen z. B. über ein Daten-Interface (OPC, SQL, Feldbus, z. B. Profibus, Modbus, Ethernet, Analogsignal usw.) übertragen; die importierten Messdaten werden in einem Archivierungsmodul, z. B. einem Datenbankmodul gespeichert, in dem die Messdaten und einen Zeitstempel t, sowie bevorzugt alle Informationen zur eindeutigen Identifikation der Produktionscharge hinterlegt werden.

Das Datenbankmodul ist mit einem Auswertesystem verbunden. Ein Auswertesystem im Sinne der Anmeldung ist ein Messleitsystem oder ein für die Durchführung der Verfahrensschritte konfigurierter Computer. Typischerweise ist das Auswertesystem mit einem System zur Kontrolle einer Waschmediumzufuhr verbunden und konfiguriert, um Befehle zu Weiterführung bzw. Beendung der Waschmediumzufuhr erteilen zu können.

Besonders bevorzugt wird die Zufuhr des Waschmediums mit Hilfe des Auswertesystems gestartet, beendet, bzw. ein neuer Waschvorgang wird veranlasst dadurch, dass das Auswertesystem den entsprechenden Befehl an eine steuerbare Waschmediumzufuhr (z. B. Ventile) erteilt.

In einer besonderen Ausführungsform des Verfahrens wird eine Grenzwertbetrachtung und/oder Änderungsanalyse durchgeführt.

Die Messdatenanalyse umfasst bei einer Grenzwertbetrachtung der Rohdaten oder der daraus errechneten Konzentrationswerte typischerweise folgende Schritte:

1. Transfer der Messwerte der überwachten Parameter des Filtratstroms in das Auswertesystem über einen vordefinierten Zeitabschnitt des Filtrations- und Wäscheprozesses mindestens bis zum **Erreichen** eines vordefinierten Parameterwerts, der zuvor experimentell oder aus der Erfahrung ermittelt wurde und der gewünschten Qualität des Filterkuchens entspricht. Wird dieser Wert erreicht, kann davon ausgegangen werden, dass der Filterkuchen im Einklang mit der Spezifikation gewaschen ist; der Waschvorgang kann beendet werden.

1.1. In einem **kontinuierlichen** Prozess wird bei Erreichung des Parameterwertes aus 1 die Zufuhr des Waschmediums beendet; der Filterkuchen wird weiterprozessiert.
1.2. In einem **Batch** Prozess wird das Ende des Waschprozesses mitgeteilt. Für die nächste Batchwäsche eines weiteren Filterkuchens kann ggf. die Waschmittelmenge entsprechend dem vordefinierten Parameter aus 1. angepasst (typischerweise reduziert) werden. Die Methode zur Anpassung der Waschmittelmenge wird weiter unten genauer beschrieben.

2. Wird der vordefinierte Parameterwert (siehe 1.) **nicht erreicht**, kann davon ausgegangen werden, dass der Filterkuchen nicht optimal ausgewaschen wurde; der Waschvorgang wird weitergeführt, indem.

2.1. In einem **kontinuierlichen** Prozess die Waschmittelzufuhr verlängert wird.
2.2. In einem **Batch** Prozess, kann für den bereits gewaschenen Kuchen eine zusätzliche Wäsche angeschlossen werden. Im nächsten Batch mit einem neuen Filterkuchen kann die Waschmittelmenge erhöht werden.

Wird der vordefinierte Parameterwert trotz der beschriebenen Maßnahmen (siehe 3.1. oder 3.2) nicht erreicht, ist eine Aufreinigung alleine durch Verdrängung der Mutterlauge unzureichend. Typischerweise wird die Waschstrategie geändert; es kann z.B. eine Anmaischwäsche (Suspensionswäsche) oder eine Kombination aus Verdrängungs- und Anmaischwäschen durchgeführt werden.

Alternativ oder zusätzlich zur Grenzwertbetrachtung umfasst das Verfahren Schritte zur Änderungsanalyse der Rohdaten bzw. der aus den Rohdaten ermittelten Konzentrationswerte.

Die Messdatenanalyse umfasst bei einer Änderungsanalyse der Rohdaten oder der daraus berechneten Konzentrationswerte_typischerweise folgende Schritte:

3. Transfer der Messwerte der überwachten Parameter des Filtratstroms in das Auswertesystem über einen vordefinierten Zeitabschnitt des Filtrations- und Wäscheprozesses. Berechnung der ersten Ableitung einer aus den Messwerten erzeugten Kurve. Ändert sich die erste Ableitung (=Steigung) der Messkurve nicht mehr oder ist sie unter einem vordefinierten Wert, können folgende Maßnahmen ergriffen werden:

> 3.1. In einem kontinuierlichen Prozess wird die Zufuhr des Waschmediums beendet. Entsprechend der Grenzwertbetrachtung aus 1. (erreicht/nicht erreicht) werden weitere ggf. Maßnahmen ergriffen z.B. Änderung der Waschstrategie.
> 3.2. In einem Batch Prozess wird das Ende des Waschprozesses mitgeteilt. Für den nächsten Waschschritt wird ggf. die Waschmittelmenge angepasst (reduziert oder erhöht) entsprechend der Grenzwertbetrachtung aus 1.

In einer besonderen Ausführungsform des Verfahrens wird die Qualität der Wäsche aus den Messdaten mittels einer oder mehreren weiteren Datenanalysen ermittelt. Dafür wird die Steigung der Messwertkurve (zwischen zwei Messwerte z. B. zwischen Messwerte der Zeitstempel t-1 und t) bevorzugt im Abschnitt C berechnet. Die berechnete Steigung wird mit einem als zugelassenen vordefinierten Wertebereich (Arbeitsbereich) für die Steigung verglichen; dieser wurde typischerweise aus vorherigen Wäschen mit zufriedenstellender Qualität ermittelt. Mögliche Abweichungen und damit Störungen im Waschvorgang bzw. in der Effektivität der Wäsche liegen vor, wenn die Steigung im Laufe der Wäsche den Arbeitsbereich verlässt.

Mögliche Störungen liegen vor, wenn:

> a) Die Steigung zu flach ist, verursacht z.B. durch Risse im Filterkuchen.
> b) Die Steigung ungleichmäßig ist, verursacht z.B. durch Löcher oder Kanäle im Filterkuchen.

Durch die Betrachtung der Steigung wird Prozessverständnis bzw. Prozessmonitoring möglich, sodass geeignete Gegenmaßnahmen eingeleitet werden können. Diese können z.B. sein: Beachtung der (Unter)sättigung der Filterkuchens, Überprüfung des eingesetzten Filtermittels auf Fehlstellen, Glattstreichen des Filterkuchens etc.

Im Allgemeinen ist die Steigung gleichbedeutend mit der Waschgeschwindigkeit $\Delta$Konz/$\Delta$Zeit alternativ $\Delta$Messsignal/$\Delta$Zeit, wobei $\Delta$=Änderung ist. Dadurch sind Prozessoptimierungen möglich, z.B.

> a) Eine erhöhte Steigung bedeutet eine erhöhte Waschgeschwindigkeit, die z.B durch einen erhöhten Druck erreicht werden kann. Daraus resultiert eine kürzere Waschzeit, wodurch die Taktzeit reduziert wird.
> b) Eine verringerte Steigung bedeutet eine erhöhte Waschzeit. Dies erhöht die Diffusionszeit des Waschmediums in das Feststoff-Porensystem, wodurch die Wascheffektivität erhöht werden kann.

Werden Störungen erkannt, erlässt das System eine Warnung; ggf. beendet das System den Waschvorgang.

- Effektivität der Wäsche

In einer besonderen Ausführungsform des Verfahrens wird die Effektivität des Waschvorgangs mit folgenden Schritten ermittelt:

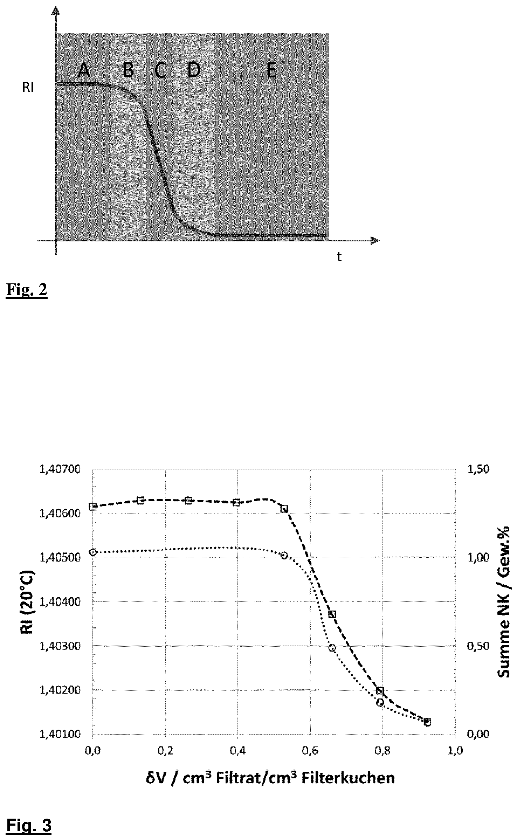

> a) Aus der Messkurve wird ein Abschnitt C ermittelt (siehe Abbildung 2), in dem die Messkurve sich mit einer Steigung von mindestens oder gleich eines vordefinierten Werts X ändert.
> b) Ein Steigungswert als durchschnittliche Steigung wird über den Abschnitt C aus a) berechnet,
> c) Eine Variabilität der Steigung im Abschnitt C aus a) wird berechnet,
> d) Ist der Steigungswert innerhalb des vordefinierten Arbeitsbereich und ist die Variabilität der Steigung kleiner X läuft der Waschvorgang effektiv, der Waschvorgang wird weitergeführt bis der Steigungswert einen vordefinierten Wert für eine ausreichende Waschqualität erreicht,
> e) Ist der Steigungswert $\leq$ eines vordefinierten Minimalwerts (flache Steigung) und / oder ist die Variabilität des Steigungswertes hoch, ist eine Gradientenbildung bzw. Unstetigkeit im Kuchen zu vermuten. Eine Warnung wird ausgegeben und / oder der Filtrationsdruck erhöht.

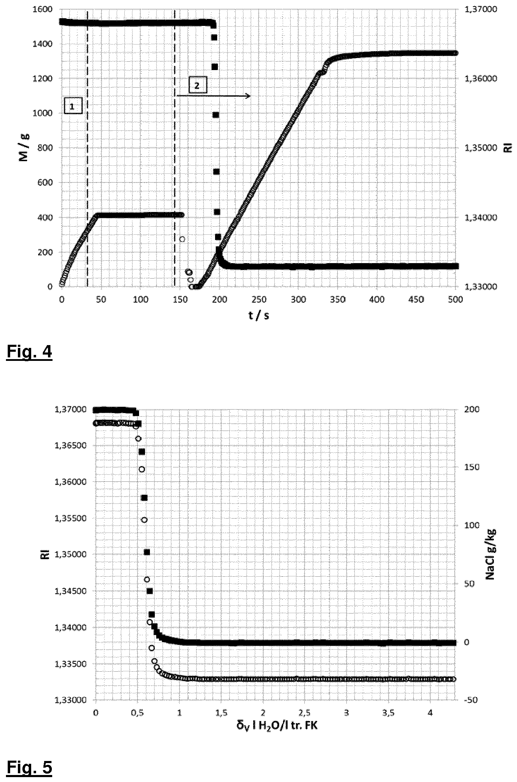

Die Bestimmung des optimalen Waschverhältnisses erfolgt aus der Analyse der Waschkurve (Messwert über Waschverhältnis Abb. 3 oder 5) für die folgenden Batches. Ändert sich der Messwert nicht mehr, ist das optimale Waschverhältnis, d. h. die optimale Waschmittelmenge überschritten.

In einer besonderen Ausführungsform des erfindungsgemäßen Verfahrens wird die für den Waschvorgang verbrauchte Waschmediummenge bis zum berechneten Ende des Waschvorgangs ermittelt und für den nächsten Waschvorgang als optimale Waschmediummenge festgelegt. Im Falle eines Batch-Waschvorgangs wird die neue Menge Waschmedium zum Waschen des Filterkuchens zugefügt. Bei einem kontinuierlichen Verfahren wird die Waschmediummenge online berechnet und z. B. eine Warnung im Falle der Überschreitung der optimalen Waschmediummenge gegeben.

Die Messwerte können sowohl online ausgewertet werden, als auch nachträglich in ihrer Gesamtheit betrachtet/interpretiert (Prozessoptimierung) werden.

Insbesondere kann durch die Messung im Filtratstrom aus einem Filterapparat zur Kuchenfiltration und die folgende Analyse der gewonnenen Messwerte eine produktspezifische Validierung der Qualität des Filterkuchens im Zusammenhang mit der Konzentration der Nebenkomponenten im Filtratstrom bzw. mit dem messbaren Summenparameter des Filtratstroms erreicht werden.

Durch das erfindungsgemäße Messverfahren werden folgende Informationen über den Verlauf des Prozesses bereitgestellt:

- Einschätzung des Prozessfortschrittes,
- Erkennung eines Abbruch/Endpunktkriteriums
- Erkennung von Prozessstörungen z.B. unregelmäßige Filterkuchestruktur

- Stabilität des Prozesses

- Hinweise zur Optimierung der Waschmittelmenge

Aus diesen Informationen wird eine indirekte Filterkuchenanalytik durchgeführt.

In einer ersten Ausführungsform des erfindungsgemäßen Messverfahrens wird die Bestimmung des Brechungsindex als Summensignal über die Nebenkomponenten verwendet.

Mit einem entsprechend in der Filtervorrichtung platzierten Messgerät wird online der Messwert, z. B. der Brechungsindex im Filtratstrom bestimmt. Das Messgerät wird bevorzugt im Filtratablauf 5 - entweder druckfrei oder ggf. in einer Druckleitung - installiert (Abb 1).

Der Messwert und seine Variation über die Zeit kann als Merkmal zur Qualitätskontrolle verwendet werden. Typischerweise wird der online gemessene Wert mit einer zuvor ermittelten Kalibrierfunktion zwischen Messwert und Nebenkomponenten/Produktqualität abgeglichen (Abb. 2).

Weiterer Gegenstand der Anmeldung ist ein Filterapparat umfassend eine Suspensionsstromzufuhr, ein Filterelement, ein Filtratablauf und eine Messvorrichtung zur Messung im Filtstratstrom, wobei die Messvorrichtung zur Messung einer oder mehrere Parameter wie z.B. Brechungsindex-, Dichte-, Ultraschalllaufzeit-, pH-Wert-, Leitfähigkeit-, Redoxpotential- und / oder spektroskopische Eigenschaften des Filtratstroms ausgewählt ist. Erfindungsgemäß ist die Messvorrichtung im oder am Filtratablauf eingebracht. Typischerweise wird die Messvorrichtung in die Filtratleitung des Filterapparats eingebracht.

Bevorzugt umfasst der Filterapparat zusätzlich eine Messvorrichtung zur Messung der Filtratmasse. Typischerweise wird mit Hilfe einer Wage die Filtratmasse im Filtratsammelgefäß ermittelt/aufgezeichnet. Alternativ wird die Filtratmasse aus dem Volumenstrom/Massenstrom mit Hilfe eines Durchflussmessers ermittelt/aufgezeichnet.

Bevorzugt wird die erfindungsgemäße Messung mit einer Messung der Filtratmasse kombiniert.

Geeignete Filtervorrichtung sind Nutschen, Zentrifugen, Büchnertrichter, Fritten, Filtertiegel, Trommelfilter, Scheibenfilter, Bandfilter und Filterpresse, ohne sich darauf zu begrenzen.

**Beispiel A zur qualitativen Beurteilung einer Feststoffwäsche:**

In einem ersten Set von Experimenten wurde die Untersuchung der Waschfiltrate in einer Verdrängungswäsche mit Hilfe des Brechungsindex untersucht und wird beispielhaft am Produkt Sivanto dargestellt.

Hierfür wurden bei der Filtration/Wäsche zu definierten Zeitpunkten dem Filtratstrom Proben in Fraktionen entnommen. Mit einem Refraktometer (Abbemat300 der Firma Anton) Paar wurde der Brechungsindex off-line gemessen und mit dem Brechungsindex der Waschlösung verglichen (Fig. 3). Bei regulärem Prozessfortschritt näherte sich der Messwert dem Brechungsindex der Waschlösung an. Zunächst bestand das Filtrat aus Mutterlauge, weshalb zu Beginn ein Plateau im Verlauf des Brechungsindex zu sehen ist. Wird die Mutterlauge in der Verdrängungswäsche allmählich von Waschmedium verdrängt, sinkt der Brechungsindex bis er einen konstanten Wert erreicht. Dieser Wert erreicht optimaler Weise den des eingesetzten Waschmediums.

Damit konnte gezeigt werden, dass der Brechungsindex als Summensignal geeignet ist, um Konzentrationsabnahmen im Filtrat nachzuweisen, Abweichungen vom Erwartungswert bei der Konzentration und der Filtrationsrate pro Zeiteinheit können dargestellt und erkannt werden.

Eine Korrelation mit der Qualität des Filterkuchens ist am Einzelfall zu prüfen und war für Sivanto möglich. Proben aus dem Filtratstrom während der Wäsche und der Filterkuchen jeweils nach Ende der Wäschen (jeder Versuch wurde mit unterschiedlichen Mengen Waschmedium durchgeführt) wurden durch HPLC analysiert.

In weiteren Experimenten wurde ein Prozessrefraktometer in Filtratablauf des Laborversuchstands zur Filtration als online Messtechnik integriert. Dafür wurde ein ProzessRefraktometer des Typs PR-43 von KPatents mit einem Messbereich von nD 1,32-1,53 verwendet. Für die Laborversuche wurde ein Durchflussadapter verwendet.

**Beispiel B zur qualitativen und quantitativen Beurteilung einer Feststoffwäsche für Modelpartikel:**

i. Versuchsdurchführung:

Die Filtrations- und Waschversuche wurden gemäß VDI Richtlinie 2762 auf einem 100 cm$^2$ Labordruckfilter bei 0,2 bar Überdruck und Raumtemperatur durchgeführt. In der Filtratleitung wurde das Prozessrefraktometer (Abbemat300 der Firma Anton) integriert. Brechungsindex und Filtratmasse wurden zeitaufgelöst aufgenommen. Nach Versuchsende wurde die Höhe und Masse des Filterkuchens bestimmt.

Die Filtration wurde bei einer Sättigung S des Filterkuchens von S=1 beendet, Reinstwasser zur Wäsche vorsichtig auf den Filterkuchen geschichtet und anschließend die Wäsche und mechanische Entfeuchtung durchgeführt. Nach Versuchsende wurde der Brechungsindex des Mutterlaugenfiltrats und des Waschfiltrats mit einem Abbemat 300 von Anton Paar bei 23°C bestimmt.

Zur Umrechnung der (online) ermittelten Brechungsindices in NaCl Konzentrationen und Massen wurde eine Kalibriergerade mit dem offline Refraktometer aufgenommen.

Als Modellpartikel wurden gewaschene SiLibeads Glaskugeln Typ S 0-50 $\mu$m (bezogen von Sigmund Lindner GmbH) verwendet. Die Feststoffkonzentration betrug 400 g/kg. Als Verunreinigung wurde NaCl in einer Konzentration von 200 g/kg verwendet. Die aufgegebene Suspensionsmenge betrug ca. 1000g, d.h. 120g NaCl wurden als gelöste Verunreinigung ins System gegeben. Für die Wäsche wurden 1192 g Reinstwasser verwendet (entspricht einem Waschverhältnis von 4,3 1 Wasser/ 1 tr. Filterkuchen), um einen sehr sauberen Filterkuchen zu erhalten.

Getrockneter Filterkuchen wurde in Reinstwasser resuspendiert und ausgerührt. Nach Zentrifugation, wurde der Brechungsindex im Überstand bestimmt. Dieser entsprach dem Wert von Wasser. Zusätzlich wurde im Überstand freies Cl$^-$ mit Hilfe eines Küvettentests zu 0 bestimmt. Das heißt der gewaschene Filterkuchen enthielt in diesem Beispiel kein NaCl.

iii. Versuchsauswertung:

**• Online Analytik: qualitative Auswertung**

Bei der parallelen Aufnahme von Filtratmasse und Brechungsindex wird im Versuch der Verlauf gemäß Figur 4 beobachtet:

- Die Filtratmasse nimmt während der Filtration und Wäsche zu bevor sie während der Entfeuchtung des Filterkuchens am Versuchsende konstant bleibt. Der Brechungsindex bleibt während der Filtration konstant, da nur Mutterlauge den Filterkuchen verlässt. Bei der anschließenden Wäsche nimmt der Brechungsindex vom Wert der Mutterlauge auf den Wert des reinen Waschmediums ab.

Wird der Plateauwert des annähernd reinen Waschmediums erreicht, kann davon ausgegangen werden, dass der Filterkuchen durch die Verdrängungswäsche nicht weiter ausgewaschen werden kann. D.h. für eine weitere Aufreinigung muss - eine andere Waschstrategie wie z.B. Anmaischwäsche - geprüft werden. Ändert sich der Wert des Brechungsindex nicht mehr, kann die Wäsche beendet werden.

Werden die obigen Daten auf das Waschverhältnis bezogen, kann direkt die nötige Menge Waschmedium ermittelt werden (s. nachfolgende Beschreibung).

In Figur 5 ist der Verlauf des Brechungsindex (RI) über das Waschverhältnis dargestellt. Es ist deutlich zu erkennen, dass der konstante Messwert des Mutterlaugenfiltrats durch die zunehmende Wassermenge herabgesetzt wird. Am Ende der Wäsche wird ein Plateauwert erreicht.

Die Abnahme des RI und das Einpendeln auf einen konstanten Wert zeigt an, dass kein weiterer Wascheffekt mehr zu erzielen ist. D.h. auch mit größeren Waschverhältnissen wird der Auswascheffekt des Filterkuchens nicht weiter verbessert. Diese rein qualitative Auswertung kann dazu genutzt werden, die Wäsche in diesem Beispiel bei einem Waschverhältnis von 1,5 zu beenden. Dies spart direkt Zeit und Kosten für Waschmedium. Durch die Aufnahme solcher Daten im Betrieb kann eine ausreichende Datengrundlage für Optimierungen hinsichtlich Waschzeit und Waschmediumverbrauch getroffen werden.

Eine quantitative Auswertung kann bei realen Produkten mit größerem Aufwand erfolgen. Für das Modellprodukt wird diese im Folgenden dargelegt.

• **Online Analytik: quantitative Auswertung**

Für die quantitative Auswertung der online Messdaten wird die Auftragung des RI und der Filtratmasse über die Zeit für Filtration und Wäsche gewählt (s. Figur 5). Für jeden Zeitabschnitt kann die Filtratmasse und NaCl Masse aus den aufgenommenen Daten über eine Kalibriergerade NaCl Konzentration-Brechungsindex berechnet werden.

$$m_{NaCl,1} = \left(m_{Filtrat,1} - m_{Filtrat,0}\right) * c_{NaCl,1}$$

Alternativ kann auch eine Integration der Kurve wie folgt durchgeführt werden:
Die Fläche unter der Kurve kann anhand der Trapezregel bestimmt werden, so dass für jeden Zeitabschnitt die bezogene Fläche in s*g/kg ermittelt werden kann:

$$\text{Fläche im Zeitabschnitt: } A_1 = 0{,}5 * (t_1 - t_0) * (c_{NaCl,1} - c_{NaCl,0})$$

Durch Bezug auf das Zeitintervall und die in diesem Zeitintervall aufgenommene Filtratmasse, kann die Masse NaCl im Zeitintervall bestimmt werden (s. Tabelle 1 und 2).

$$m_{NaCl,1} = \frac{A_1}{(t_1 - t_0)} * \left(m_{Filtrat,1} - m_{Filtrat,0}\right)$$

Tabelle 1: Integration der Messdaten für Filtration

| Zeit | Delta t | RI | Masse | Delta m | NaCl | Einzelfläche | Einzelfläche | Masse NaCl |
|---|---|---|---|---|---|---|---|---|
| s | s | | g | g | g/kg | s*g/kg | g/kg | g |
| 0,00 | 1,00 | 1,36823 | 12,4 | 12,4 | 200,2 | 197,7 | 197,7 | 2,46 |
| 1,00 | 1,00 | 1,36821 | 25,8 | 13,4 | 200,1 | 200,2 | 200,2 | 2,68 |
| 2,00 | 1,00 | 1,36824 | 41,2 | 15,4 | 200,3 | 200,2 | 200,2 | 3,08 |
| 3,00 | 1,00 | 1,36816 | 53,0 | 11,8 | 199,8 | 200,1 | 200,1 | 2,36 |
| 4,00 | 1,00 | 1,36813 | 66,1 | 13,1 | 199,7 | 199,7 | 199,7 | 2,62 |
| 5,00 | 1,00 | 1,36816 | 80,1 | 14,0 | 199,8 | 199,7 | 199,7 | 2,79 |
| 6,00 | 1,00 | 1,36812 | 90,8 | 10,7 | 199,6 | 199,7 | 199,7 | 2,14 |
| 7,00 | 1,00 | 1,36811 | 103,1 | 12,3 | 199,5 | 199,6 | 199,6 | 2,45 |
| 8,00 | 1,00 | 1,3681 | 115,8 | 12,7 | 199,5 | 199,5 | 199,5 | 2,54 |
| 9,00 | 1,00 | 1,36811 | 126,1 | 10,4 | 199,5 | 199,5 | 199,5 | 2,07 |
| 10,00 | 1,00 | 1,36812 | 134,6 | 8,5 | 199,6 | 199,6 | 199,6 | 1,69 |
| 11,00 | 1,00 | 1,36808 | 144,1 | 9,4 | 199,4 | 199,5 | 199,5 | 1,88 |
| 12,00 | 1,00 | 1,36806 | 152,9 | 8,8 | 199,3 | 199,3 | 199,3 | 1,76 |
| 13,00 | 1,00 | 1,36808 | 166,6 | 13,7 | 199,4 | 199,3 | 199,3 | 2,73 |
| 14,00 | 1,00 | 1,36805 | 176,0 | 9,5 | 199,2 | 199,3 | 199,3 | 1,89 |
| 15,00 | 1,00 | 1,36811 | 186,0 | 10,0 | 199,5 | 199,4 | 199,4 | 1,99 |
| 16,00 | 1,00 | 1,3681 | 194,8 | 8,7 | 199,5 | 199,5 | 199,5 | 1,74 |
| 17,00 | 1,00 | 1,36808 | 202,7 | 7,9 | 199,4 | 199,4 | 199,4 | 1,57 |
| 18,00 | 1,00 | 1,36803 | 211,1 | 8,4 | 199,1 | 199,2 | 199,2 | 1,68 |
| 19,00 | 1,00 | 1,36803 | 220,1 | 9,0 | 199,1 | 199,1 | 199,1 | 1,79 |

(fortgesetzt)

| Zeit | Delta t | RI | Masse | Delta m | NaCl | Einzelfläche | Einzelfläche | Masse NaCl |
|------|---------|-----|-------|---------|------|--------------|--------------|------------|
| s | s | | g | g | g/kg | s*g/kg | g/kg | g |
| 20,00 | 1,00 | 1,36802 | 228,3 | 8,2 | 199,0 | 199,1 | 199,1 | 1,63 |
| 21,00 | 1,00 | 1,36803 | 236,6 | 8,3 | 199,1 | 199,1 | 199,1 | 1,65 |
| 22,00 | 1,00 | 1,36804 | 243,7 | 7,2 | 199,2 | 199,1 | 199,1 | 1,43 |
| 23,00 | 1,00 | 1,36803 | 252,4 | 8,7 | 199,1 | 199,1 | 199,1 | 1,73 |
| 24,00 | 1,00 | 1,36803 | 258,0 | 5,6 | 199,1 | 199,1 | 199,1 | 1,12 |
| 25,00 | 1,00 | 1,36803 | 266,9 | 8,9 | 199,1 | 199,1 | 199,1 | 1,78 |
| 26,00 | 1,00 | 1,36803 | 273,8 | 6,9 | 199,1 | 199,1 | 199,1 | 1,37 |
| 27,00 | 1,00 | 1,36802 | 280,8 | 7,0 | 199,0 | 199,1 | 199,1 | 1,40 |
| 28,00 | 1,00 | 1,36803 | 289,3 | 8,5 | 199,1 | 199,1 | 199,1 | 1,70 |
| 29,00 | 1,00 | 1,36803 | 297,8 | 8,5 | 199,1 | 199,1 | 199,1 | 1,69 |
| 30,00 | 1,00 | 1,36803 | 305,2 | 7,4 | 199,1 | 199,1 | 199,1 | 1,47 |
| 31,00 | 1,00 | 1,36802 | 313,2 | 8,0 | 199,0 | 199,1 | 199,1 | 1,58 |
| 32,00 | 1,00 | 1,368 | 320,6 | 7,4 | 198,9 | 199,0 | 199,0 | 1,47 |
| 33,00 | 1,00 | 1,36797 | 328,4 | 7,9 | 198,8 | 198,8 | 198,8 | 1,56 |
| 34,00 | 1,00 | 1,368 | 335,3 | 6,8 | 198,9 | 198,8 | 198,8 | 1,36 |
| 35,00 | 1,00 | 1,36797 | 342,6 | 7,3 | 198,8 | 198,8 | 198,8 | 1,45 |
| 36,00 | 1,00 | 1,36803 | 350,1 | 7,5 | 199,1 | 198,9 | 198,9 | 1,49 |
| 37,00 | 1,00 | 1,36803 | 357,3 | 7,3 | 199,1 | 199,1 | 199,1 | 1,44 |
| 38,00 | 1,00 | 1,368 | 365,2 | 7,8 | 198,9 | 199,0 | 199,0 | 1,56 |
| 39,00 | 1,00 | 1,36795 | 373,2 | 8,0 | 198,6 | 198,8 | 198,8 | 1,59 |
| 40,00 | 1,00 | 1,36798 | 380,3 | 7,2 | 198,8 | 198,7 | 198,7 | 1,43 |
| 41,00 | 1,00 | 1,368 | 387,4 | 7,1 | 198,9 | 198,9 | 198,9 | 1,41 |
| 42,00 | 1,00 | 1,36797 | 393,4 | 5,9 | 198,8 | 198,8 | 198,8 | 1,18 |
| 43,00 | 1,00 | 1,36803 | 400,8 | 7,4 | 199,1 | 198,9 | 198,9 | 1,47 |
| 44,00 | 1,00 | 1,368 | 409,0 | 8,2 | 198,9 | 199,0 | 199,0 | 1,63 |
| 45,00 | 1,00 | 1,36794 | 411,4 | 2,4 | 198,6 | 198,8 | 198,8 | 0,48 |
| 46,00 | 1,00 | 1,36794 | 412,8 | 1,4 | 198,6 | 198,6 | 198,6 | 0,27 |
| 47,00 | 1,00 | 1,36794 | 413,4 | 0,6 | 198,6 | 198,6 | 198,6 | 0,13 |
| 48,00 | 1,00 | 1,36794 | 413,7 | 0,3 | 198,6 | 198,6 | 198,6 | 0,06 |
| 49,00 | 1,00 | 1,36794 | 414,0 | 0,3 | 198,6 | 198,6 | 198,6 | 0,06 |
| 50,00 | 1,00 | 1,36792 | 414,2 | 0,2 | 198,5 | 198,5 | 198,5 | 0,04 |
| 51,00 | 1,00 | 1,3679 | 414,2 | 0,0 | 198,4 | 198,4 | 198,4 | 0,00 |
| 52,00 | 1,00 | 1,36794 | 414,2 | 0,0 | 198,6 | 198,5 | 198,5 | 0,00 |
| Summe NaCl Filtration: 83 g | | | | | | | | |

Tabelle 2: Integration der Messdaten für Wäsche

| Zeit | Delta t | RI | Masse | Delta m | NaCl | Einzelfläche | Einzelfläche | Masse NaCl |
|---|---|---|---|---|---|---|---|---|
| s | s | | g | g | g/kg | s*g/kg | g/kg | 4 |
| 172,00 | 1,00 | 1,36804 | 0,0 | 0,0 | 199,2 | 199,3 | 199,3 | 0,00 |
| 173,00 | 1,00 | 1,36805 | 0,0 | 0,0 | 199,2 | 199,2 | 199,2 | 0,00 |
| 174,00 | 1,00 | 1,36811 | 1,1 | 1,1 | 199,5 | 199,4 | 199,4 | 0,22 |
| 175,00 | 1,00 | 1,36811 | 5,7 | 4,6 | 199,5 | 199,5 | 199,5 | 0,91 |
| 176,00 | 1,00 | 1,36811 | 13,5 | 7,8 | 199,5 | 199,5 | 199,5 | 1,56 |
| 177,00 | 1,00 | 1,36813 | 19,9 | 6,4 | 199,7 | 199,6 | 199,6 | 1,27 |
| 178,00 | 1,00 | 1,36817 | 26,0 | 6,1 | 199,9 | 199,8 | 199,8 | 1,21 |
| 179,00 | 1,00 | 1,36812 | 33,1 | 7,2 | 199,6 | 199,7 | 199,7 | 1,43 |
| 180,00 | 1,00 | 1,36811 | 38,2 | 5,0 | 199,5 | 199,6 | 199,6 | 1,00 |
| 181,00 | 1,00 | 1,36811 | 46,7 | 8,5 | 199,5 | 199,5 | 199,5 | 1,70 |
| 182,00 | 1,00 | 1,36811 | 52,9 | 6,2 | 199,5 | 199,5 | 199,5 | 1,24 |
| 183,00 | 1,00 | 1,3681 | 59,4 | 6,6 | 199,5 | 199,5 | 199,5 | 1,31 |
| 184,00 | 1,00 | 1,36809 | 63,6 | 4,2 | 199,4 | 199,5 | 199,5 | 0,83 |
| 185,00 | 1,00 | 1,36804 | 72,2 | 8,6 | 199,2 | 199,3 | 199,3 | 1,71 |
| 186,00 | 1,00 | 1,36811 | 79,9 | 7,7 | 199,5 | 199,3 | 199,3 | 1,54 |
| 187,00 | 1,00 | 1,36812 | 90,9 | 11,0 | 199,6 | 199,6 | 199,6 | 2,19 |
| 188,00 | 1,00 | 1,36809 | 100,2 | 9,3 | 199,4 | 199,5 | 199,5 | 1,86 |
| 189,00 | 1,00 | 1,36803 | 108,6 | 8,3 | 199,1 | 199,3 | 199,3 | 1,66 |
| 190,00 | 1,00 | 1,36803 | 117,0 | 8,4 | 199,1 | 199,1 | 199,1 | 1,68 |
| 191,00 | 1,00 | 1,36799 | 125,5 | 8,5 | 198,9 | 199,0 | 199,0 | 1,69 |
| 192,00 | 1,00 | 1,36763 | 133,8 | 8,3 | 196,8 | 197,8 | 197,8 | 1,65 |
| 193,00 | 1,00 | 1,36597 | 142,3 | 8,5 | 187,4 | 192,1 | 192,1 | 1,63 |
| 194,00 | 1,00 | 1,36174 | 153,2 | 10,9 | 163,3 | 175,3 | 175,3 | 1,91 |
| 195,00 | 1,00 | 1,35479 | 161,6 | 8,5 | 123,8 | 143,6 | 143,6 | 1,22 |
| 196,00 | 1,00 | 1,34658 | 170,0 | 8,3 | 77,1 | 100,4 | 100,4 | 0,84 |
| 197,00 | 1,00 | 1,3408 | 179,9 | 9,9 | 44,2 | 60,7 | 60,7 | 0,60 |
| 198,00 | 1,00 | 1,33723 | 186,3 | 6,5 | 23,9 | 34,1 | 34,1 | 0,22 |
| 199,00 | 1,00 | 1,33544 | 195,9 | 9,6 | 13,7 | 18,8 | 18,8 | 0,18 |
| 200,00 | 1,00 | 1,33457 | 204,0 | 8,1 | 8,8 | 11,3 | 11,3 | 0,09 |
| 201,00 | 1,00 | 1,33406 | 211,9 | 7,9 | 5,9 | 7,3 | 7,3 | 0,06 |
| 202,00 | 1,00 | 1,33376 | 221,4 | 9,6 | 4,2 | 5,0 | 5,0 | 0,05 |
| 203,00 | 1,00 | 1,33355 | 230,6 | 9,2 | 3,0 | 3,6 | 3,6 | 0,03 |
| 204,00 | 1,00 | 1,33348 | 236,5 | 5,9 | 2,6 | 2,8 | 2,8 | 0,02 |
| 205,00 | 1,00 | 1,33339 | 244,9 | 8,4 | 2,1 | 2,3 | 2,3 | 0,02 |
| 206,00 | 1,00 | 1,33331 | 252,8 | 7,9 | 1,6 | 1,8 | 1,8 | 0,01 |
| 207,00 | 1,00 | 1,33323 | 263,6 | 10,8 | 1,2 | 1,4 | 1,4 | 0,01 |

(fortgesetzt)

| Zeit | Delta t | RI | Masse | Delta m | NaCl | Einzelfläche | Einzelfläche | Masse NaCl |
|------|---------|------|-------|---------|------|--------------|--------------|------------|
| s | s | | g | g | g/kg | s*g/kg | g/kg | 4 |
| 208,00 | 1,00 | 1,33316 | 271,5 | 7,9 | 0,8 | 1,0 | 1,0 | 0,01 |
| 209,00 | 1,00 | 1,33309 | 281,7 | 10,2 | 0,4 | 0,6 | 0,6 | 0,01 |
| 210,00 | 1,00 | 1,33307 | 289,7 | 8,0 | 0,3 | 0,3 | 0,3 | 0,00 |
| 211,00 | 1,00 | 1,333 | 297,7 | 8,0 | -0,1 | 0,1 | 0,1 | 0,00 |
| 212,00 | 1,00 | 1,33299 | 305,8 | 8,1 | -0,2 | -0,2 | -0,2 | 0,00 |
| Summe NaCl Wäsche: 33g | | | | | | | | |

Werden alle Massen NaCl aus den einzelnen Abschnitten addiert - also die Messkurven integriertergibt sich die ausgewaschene Masse NaCl im gesamten Versuch. Diese beläuft sich in diesem Beispiel auf 116 g NaCl, was einer Abweichung von ca. 3% von der eingesetzten Menge NaCl entspricht.

**• Massenbilanz aus offline Bestimmungen:**

Um die Massenbilanz aus den online Messungen zu überprüfen, wurden die Filtratmassen und die Brechungsindices in den gesammelten Filtraten bestimmt. Hieraus lässt sich eine Massenbilanz berechnen. Im dargestellten Versuch wurden 120 g NaCl eingesetzt. Es wurden 414 g Mutterlaugenfiltrat mit einer Konzentration von 200 g/kg NaCl und 1347 g Waschfiltrat mit einer Konzentration von 24 g/kg NaCl aufgefangen. Daraus ergeben sich 83 g NaCl gelöst im Mutterlaugenfiltrat und 32 g NaCl gelöst im Waschfiltrat. Da im Filterkuchen kein NaCl nachzuweisen war, konnten 115g NaCl in den Filtraten messtechnisch wiedergefunden werden.

**• Aussagen zu Qualität der durchgeführten Wäsche**

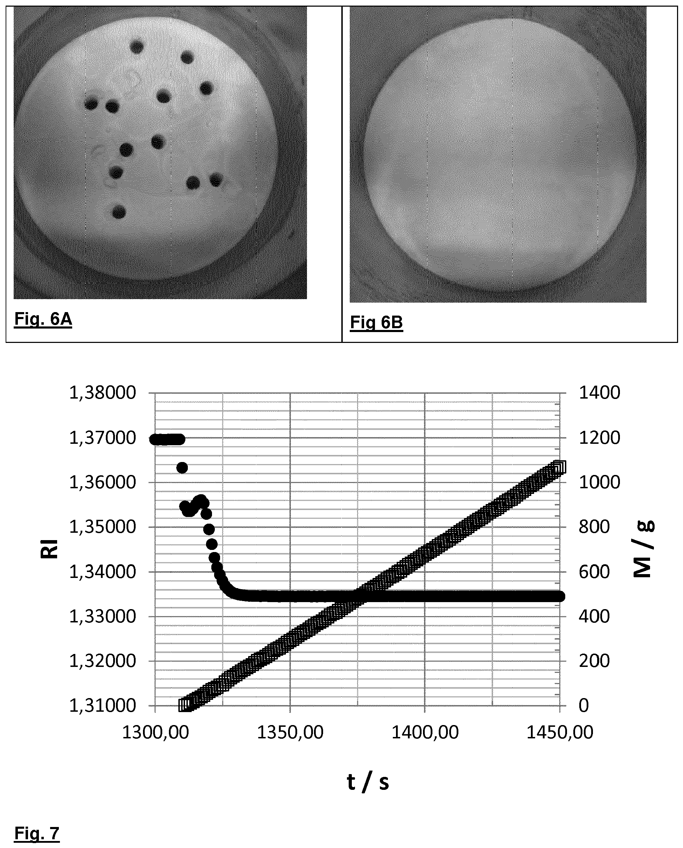

Der Brechungsindex nimmt während der Wäsche vom (Anfangs-)Wert der Mutterlauge auf einen niedrigeren (Plateau)wert am Ende der Wäsche ab. Die Kurve fällt damit mit einer bestimmten Steigung. Ändert sich diese Steigung, kann daraus auf die Qualität der Wäsche geschlossen werden.
Im Folgenden wird ein Beispiel mit dem oben beschriebenen Modellsystem dargelegt:
In die aufgegebene Suspension wurden Stäbe gesteckt, um künstlich Kanäle im Filterkuchen zu erzeugen. Der Filterkuchen wurde nach der Mutterlaugenfiltration entfeuchtet (Figur 6A). Abbildung 7 zeigt den Verlauf und insbesondere den Wiederanstieg des Brechungsindex. Dies lässt darauf schließen, dass die Waschfront nicht homogen durch den Filterkuchen verläuft, sondern sich Unstetigkeiten - hier Kanäle - gebildet haben. Dies würde man allein durch eine visuelle Inspektion des Filterkuchens nach der Wäsche nicht erkennen, wie in Figur 6B zu erkennen ist. Hier können bei einer Inspektion des Filterkuchens von oben, wie es technisch möglich ist, keine Risse, Kanäle, etc. erkannt werden, die sich im Inneren des Filterkuchens verbergen.

Beschreibung der Figuren:

Fig. 1: Schematische Darstellung einer Drucknutsche
1 Drucknutsche, 2 Filterkuchen, 3 Messgerät (z.B. Beispiel RI)

Fig. 2: Trenddarstellung des Messwertes (RI) über die Zeit (t) unterteilt in Prozessphasen:

A- Verdrängung der Mutterlauge , B- Zwischenbereich , C- Zugelassener Bereich, D-Diffusionsbereich , E-Ende des Wascheffekts.

Fig. 3: Vergleich Brechungsindex (□) und Summe der Nebenkomponenten (○) für das Produkt Sivanto. Der Brechungsindex von reinem Butanol beträgt bei 20°C 1,39932. (Beispiel A).

Fig. 4: Filtratmasse M (○) und Brechungsindex RI (■) als Funktion der Zeit t. Bereich 1: Filtration; Bereich 2:Wäsche.

Fig. 5: NaCl Konzentration (■) und Brechungsindex RI (○) als Funktion des Waschverhältnisses.

Fig. 6A: Filterkuchen mit Kanälen, entfeuchtet nach Mutterlaugenfiltration.

Fig. 6B: Filterkuchen nach mechanischer Entfeuchtung nach Wäsche.

Fig. 7: □ Masse (M) und ● Brechungsindex (RI) als Funktion der Zeit (t).

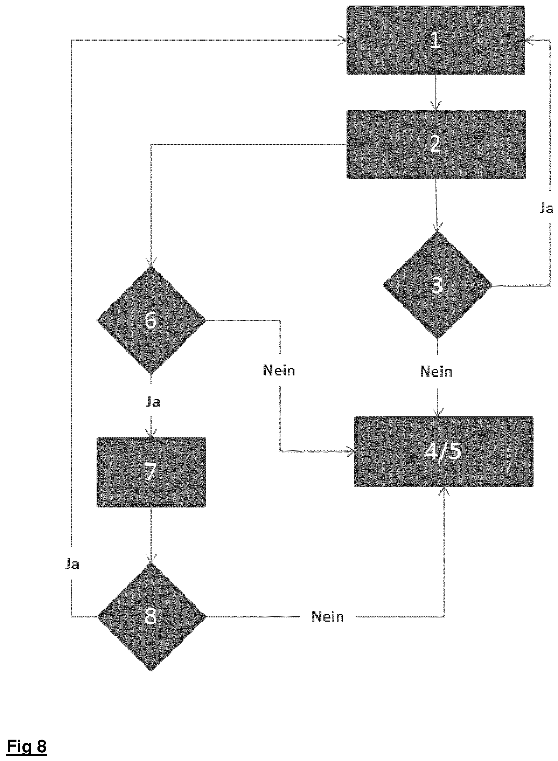

Fig. 8: Blockdiagramm zum Verfahren zur Kontrolle des Waschvorgangs

1- Input von Messdaten
2- Berechnung der ersten Ableitung
3- Erste Ableitung > 0 oder größer als ein vordefinierter Wert?
4- Ende des Waschvorgangs
5- Fehlermeldung
6- Erste Ableitung innerhalb eines vordefinierten Bereichs C?
7- Berechnung der durchschnittlichen Steigung und Variabilität (Schritte e-g)
8- Durchschnittliche Steigung und Variabilität innerhalb der vordefinierten Bereiche?

**Patentansprüche**

1. Messverfahren zur Kontrolle eines Filtrations- und Waschvorgangs eines Feststoffs in einem Filterapparat zur Kuchenfiltration, wobei mindestens eine Messvorrichtung im oder am Filtratablauf des Filterapparats angebracht ist, die einen oder mehrere Parameterwerte eines Filtratstroms aus dem Filterapparat zur Kuchenfiltration mindestens während des Waschvorgangs misst.

2. Messverfahren nach Anspruch 1, wobei die Parameter des Filtratstroms aus der Gruppe umfassend Brechungsindex, Dichte, Ultraschalllaufzeit, Redox-Potential sowie spektroskopische Summeneigenschaften und/oder stoffspezifischen Eigenschaften einer oder mehreren Haupt- oder Nebenkomponente selektiert werden.

3. Verfahren nach Anspruch 2, wobei der Brechungsindex und / oder die Dichte des Filtratstroms gemessen werden.

4. Verfahren nach einem der Ansprüche 1 bis 3, wobei die Parameterwerte über die Zeit als Messdaten in ein Archivierungsmodul zur Speicherung der Messdaten übertragen und mit einem Zeitstempel t gespeichert werden.

5. Computer implementiertes Verfahren zur Kontrolle eines Waschvorgangs eines Feststoffs in einem Filterapparat zur Kuchenfiltration, indem Messdaten, gewonnen mit Hilfe einer Messvorrichtung, im oder am Filtratablauf des Filterapparats mindestens während des Waschvorgangs in ein Auswertesystem ausgewertet werden, wobei das Verfahren als Messwerte Rohdaten eines Parameters verwendet oder aus den Rohdaten unter Verwendung von verfügbaren Kalibrierfunktionen Konzentrationswerte ermittelt und diese verwendet.

6. Verfahren nach Anspruch 5, indem das Ende des Waschvorgangs mit folgenden Schritten ermittelt wird:

a. Vorgabe eines vordefinierten Soll-Wertes im Filtratstrom, bei dem der Waschvorgang als beendet gelten soll, wobei der Soll-Wert ein gemessener Parameterwert oder ein Konzentrationswert sein kann,
b. Transfer der Messdaten in das Auswertesystem über einen vordefinierten Zeitabschnitt des Waschvorgangs mindestens bis zum Erreichen des Soll-Wertes aus a),
c. Beendung des Waschvorgangs bei Erreichung des Soll-Wertes aus a) und / oder Mitteilung über das Ende des Waschprozesses über eine Nutzeroberfläche,
d. Wird der Soll-Wert aus a) nicht erreicht, wird der Waschvorgang weitergeführt,

alternativ wird das Ende des Waschvorgangs mit folgenden Schritten ermittelt:

a') analog zum Schritt b) Transfer der Messwerte der Messdaten in das Auswertesystem über einen vordefinierten Zeitabschnitt des Waschvorgangs,
b') Berechnung der ersten Ableitung einer Messkurve zwischen den Messdaten zu den Zeitpunkten t-1 und t,
c') beträgt die erste Ableitung aus b') mehr als null bzw. mehr als ein vordefinierter Wert für die Ableitung der Messkurve, bei dem das Verfahren als beendet gelten soll, wird der Waschvorgang weitergeführt; Schritt b') wird wiederholt,

d') beträgt die erste Ableitung aus b') null, ist sie kleiner oder gleich dem vordefinierten Wert aus c'), wird der Waschvorgang beendet und / oder das Ende des Waschprozesses über eine Nutzeroberfläche mitgeteilt.

7. Verfahren nach Anspruch 6, in dem die für den Waschvorgang verbrauchte Waschmediummenge bis zum Ende des Waschvorgangs ermittelt wird und für den nächsten Waschvorgang als optimale Waschmediummenge festgelegt wird.

8. Verfahren nach Anspruch 5, mit folgenden Schritten:

a. Transfer der Messwerte der Messdaten in das Auswertesystem über einen vordefinierten Zeitabschnitt des Waschvorgangs,
b. Berechnung der ersten Ableitung einer Messkurve zwischen den Messdaten zu den Zeitpunkten t-1 und t,
c. Vergleich der ersten Ableitung mit einem als zugelassenen vordefinierten Wertebereich für die erste Ableitung,
d. Beendung des Waschvorgangs und / oder Meldung der Abweichung über eine Nutzeroberfläche falls die erste Ableitung sich außerhalb des vordefinierten Wertebereich aus c) befindet,

alternativ oder zusätzlich zu Schritt d)

e. Berechnung eines Abschnitts C, in dem die erste Ableitung sich innerhalb des vordefinierten Wertebereich aus c) befindet,
f. Berechnung eines Steigungswerts als durchschnittliche Steigung über den Abschnitt C aus e),
g. Berechnung einer Variabilität des Steigungswerts über den Abschnitt C aus e),
h. Ist der Steigungswert aus f) innerhalb eines vordefinierten Arbeitsbereichs für den Steigungswert und ist die Variabilität der Steigung aus g) kleiner oder gleich einer vordefinierten Toleranzgrenze für die Variabilität läuft der Waschvorgang effektiv, der Waschvorgang wird weitergeführt,
i. Befindet sich der Steigungswert aus f) außerhalb des vordefinierten Arbeitsbereichs für den Steigungswert und / oder die Variabilität des Steigungswertes aus g) über die vordefinierten Toleranzgrenze für die Variabilität wird eine Warnung ausgegeben und / oder der Waschvorgang beendet.

9. Verfahren nach einem der Ansprüche 5 bis 8, wobei das Verfahren zur Online Kontrolle des Waschvorgangs verwendet wird.

10. Verfahren nach einem der Ansprüche 5 bis 8, wobei mindestens eine Konzentration von mindestens einer Komponente im Filtratstrom und / oder mindestens einem messbaren Summenparameter des Filtratstroms ermittelt wird.

11. Filterapparat umfassend eine Suspensionsmediumzufuhr, ein Filterelement zur Kuchenfiltration und ein Filtratablauf, **dadurch gekennzeichnet, dass** mindestens eine Messvorrichtung zur Messung im Filtratstrom im oder am dem Filtratablauf eingebracht ist.

12. Filterapparat gemäß Anspruch 11, wobei die Messvorrichtung zur Messung einer oder mehrerer Parameter ausgewählt aus der Gruppe bestehend aus Brechungsindex-, Dichte-, Ultraschalllaufzeit-, pH-Wert-, Leitfähigkeit-, Redoxpotential- und / oder spektroskopische Eigenschaften des Filtratstroms als Summenparameter alternativ mindestens eines repräsentativen Bestandteils im Filtratstrom messen kann.

13. Filterapparat nach Anspruch 11 oder 12 ausgewählt aus der Gruppe umfassend Nutschen, Zentrifugen, Büchnertrichter, Fritten, Filtertiegel, Trommelfilter, Scheibenfilter, Bandfilter und Filterpresse.

14. Filterapparat nach einem der Ansprüche 11 bis 13, wobei die Messvorrichtung mit einem Auswertesystem verbunden ist, das zur Auswertung von gemessenen Daten konfiguriert ist.

15. Filterapparat nach Anspruch 14, wobei der Filterapparat eine steuerbare Waschmediumzufuhr aufweist und das Auswertesystem konfiguriert ist, um Befehle zur Öffnung oder Schließung der Waschmediumzufuhr erteilen zu können.

**Fig. 1**

**Fig. 2**

**Fig. 3**

**Fig. 4**

**Fig. 5**

Fig. 6A

Fig 6B

Fig. 7

**Fig 8**

Europäisches
Patentamt

European
Patent Office

Office européen
des brevets

**EUROPÄISCHER RECHERCHENBERICHT**

Nummer der Anmeldung

EP 18 16 7620

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Kopra ET AL: "Application of the refractometer in the measurement and monitoring of brown stock washing, doctoral dissertation", <br><br> 1. Januar 2015 (2015-01-01), XP055374630, Gefunden im Internet: URL:https://aaltodoc.aalto.fi/bitstream/handle/123456789/15451/isbn9789526061344.pdf?sequence=1&isAllowed=y [gefunden am 2017-05-19] * Zusammenfassung * ----- | 1-4, 11-15 | INV. B01D9/00 B01D29/085 B01D29/60 |
| X | LOUHI-KULTANEN ET AL: "Filter cake washing: Partial dissolution of organic particles and real-time monitoring based on Raman spectroscopy", SEPARATION AND PURIFICATION TECHNOLOGY, ELSEVIER SCIENCE, AMSTERDAM, NL, Bd. 59, Nr. 3, 4. Februar 2008 (2008-02-04), Seiten 270-276, XP022453823, ISSN: 1383-5866, DOI: 10.1016/J.SEPPUR.2007.06.017 * das ganze Dokument * ----- | 1,2, 11-15 | RECHERCHIERTE SACHGEBIETE (IPC) <br><br> B01D |

~~Der vorliegende Recherchenbericht wurde für alle Patentan~~sprüche erstellt

| Recherchenort | Abschlußdatum der Recherche | Prüfer |
|---|---|---|
| München | 22. Oktober 2018 | Bjola, Bogdan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-4, 11-15

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

Nummer der Anmeldung

EP 18 16 7620

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-4, 11-15

>    Messverfahren zur Kontrolle eines Filtrations- und Waschvorgangs und Filterapparat umfassend eine Messvorrichtung zur Messung eines Parameters im Filtratstrom im oder an dem Filtratablauf, wobei die Parameter des Filtratstroms aus der Gruppe umfassend Brechungsindex, Dichte, Ultraschalllaufzeit, Redox-Potential sowie spektroskopische Summeneigenschaften und/oder stoffspezifischen Eigenschaften der Komponente selektiert werden.
>
>    ---

2. Ansprüche: 5-10

>    Computer implementiertes Verfahren zur Kontrolle eines Waschvorgangs eines Feststoffs in einem Filterapparat, wobei das Ende des Waschvorgangs mit gewissen Schritten (siehe Ansprüche 6 und 8) ermittelt wird.
>
>    ---